(19) Europäisches Patentamt
European Patent Office
Office européen des brevets

(11) **EP 2 000 348 B1**

(12) # FASCICULE DE BREVET EUROPEEN

(45) Date de publication et mention
de la délivrance du brevet:
**21.09.2011 Bulletin 2011/38**

(51) Int Cl.:
***B60L 1/10*** *(2006.01)*     ***H02M 1/12*** *(2006.01)*

(21) Numéro de dépôt: **08103519.8**

(22) Date de dépôt: **14.04.2008**

(54) **Véhicule ferroviaire et atelier équipé d'une prise de quai pour ce véhicule**

Schienenfahrzeug und Bahnsteiganschluss für dieses Fahrzeug

Railway vehicle and workshop equipped with a platform socket for this vehicle

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **08.06.2007 FR 0755607**

(43) Date de publication de la demande:
**10.12.2008 Bulletin 2008/50**

(73) Titulaire: **ALSTOM Transport SA**
**92300 Levallois-Perret (FR)**

(72) Inventeur: **Weytens, Michel**
**1420 BRAINE L'ALLEUD (BE)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**WO-A-2006/130735**     **DE-U1-202006 018 439**

• **BELMONTE J C ET AL: "STATIC CONVERTERS FOR ROLLING STOCK" ALSTHOM REVIEW, ALSTHOM, PARIS, FR, no. 4, janvier 1986 (1986-01), pages 39-50, XP002017189**
• **MATSUO H ET AL: "An improved 2l0 kVA auxiliary power supply system of the electric railway rolling stock by using a new two phase buck-boost type DC-DC converter" POWER ELECTRONICS SPECIALISTS CONFERENCE, PESC '94 RECORD., 25TH ANNUAL IEEE TAIPEI, TAIWAN 20-25 JUNE 1994, NEW YORK, NY, USA, IEEE, 20 juin 1994 (1994-06-20), pages 709-713, XP010121180 ISBN: 0-7803-1859-5**

## Description

La présente invention concerne un véhicule ferroviaire et un atelier équipé d'une prise de quai pour ce véhicule.

Il existe des véhicules ferroviaires comportant :

- un bus auxiliaire d'alimentation en moyenne tension formé d'au moins un conducteur de phase et d'un conducteur de neutre, auxquels sont raccordées des charges auxiliaires embarquées à l'intérieur du véhicule ferroviaire,
- au moins un convertisseur auxiliaire apte à convertir de l'énergie électrique captée à partir d'une caténaire en de la moyenne tension délivrée sur le bus auxiliaire lorsque le véhicule ferroviaire est connecté à la caténaire, ce convertisseur auxiliaire étant raccordé à cet effet aux conducteurs de phase et de neutre du bus auxiliaire en des points de raccordement, et muni d'une masse de convertisseur raccordée à la terre,
- un premier filtre CEM (Compatibilité Electromagnétique) directement raccordé entre les points de raccordement aux conducteurs de phase et la masse, comportant un condensateur C1 raccordé entre chaque point de raccordement du convertisseur auxiliaire et un même point commun raccordé à la masse, et
- une prise de quai solidaire du véhicule ferroviaire et raccordée à chaque conducteur du bus auxiliaire, cette prise étant apte, lorsque le véhicule ferroviaire est à quai, à être embrochée avec une prise correspondante solidaire du quai pour alimenter le bus auxiliaire en moyenne tension à partir de la prise de quai lorsque le véhicule ferroviaire est déconnecté de la caténaire et, en alternance, à être débrochée de la prise de quai correspondante lorsque le véhicule ferroviaire roule.

Un tel véhicule est décrit par exemple dans le document: Belmonte J.C. et al, "Static Converters for Rolling Stock - Recent Developments and Experience", Alsthom Review, Alsthom, Paris, FR, no. 4, janvier 1986 (1986-01), pages 39-50.

Par moyenne tension, on désigne ici une tension alternative comprise entre 100 et 1000 Vca et de fréquence inférieure ou égale à 60 Hz, typiquement 400 Veff 50Hz triphasé.

Par caténaire, on désigne aussi bien des caténaires suspendues au-dessus des voies ferrées qu'une caténaire posée au sol et permettant d'alimenter le véhicule ferroviaire. La caténaire posée au sol est plus connue sous le terme de « troisième rail ».

Les charges auxiliaires sont constituées de tous les équipements électriques embarqués dans le véhicule ferroviaire et qui doivent être alimentés en électricité à l'exception des moteurs de propulsion du véhicule. Par exemple, les charges auxiliaires peuvent être des climatiseurs, des ventilateurs, l'éclairage ou encore un chargeur de batterie.

On désigne par « directement » le fait que le raccordement électrique est réalisé sans passer par l'intermédiaire d'un conducteur électrique ou d'un composant électrique dont l'impédance aux fréquences supérieures à 10 kHz est supérieure à l'impédance du filtre CEM aux mêmes fréquences respectives.

Dans les véhicules ferroviaires existants, le point commun de raccordement des condensateurs du filtre CEM est directement raccordé à la masse.

Dans les véhicules ferroviaires existants, lorsque le convertisseur auxiliaire fonctionne pour alimenter le bus auxiliaire en moyenne tension, celui-ci génère des signaux électriques parasites hautes fréquences. Par haute fréquence on désigne un signal dont la fréquence est supérieure ou égale à 10 kHz. Aux hautes fréquences, l'impédance des condensateurs C1 est très faible. Par conséquent, le filtre CEM permet de court-circuiter à la masse les signaux parasites hautes fréquences. Grâce à cela, le les perturbations électromagnétiques conduites et rayonnées par le convertisseur et le véhicule ferroviaire sont suffisamment réduites pour satisfaire aux normes en la matière, telles que par exemple, la norme EN 50 121-3-2.

Lorsque le véhicule ferroviaire est à quai, il est souvent nécessaire de déconnecter la caténaire ou d'interrompre l'alimentation de la caténaire pour des raisons de sécurité. Cela se produit notamment lors d'opérations de maintenance. Toutefois, dans le même temps, il est souhaitable de continuer à alimenter certaines charges auxiliaires embarquées dans le véhicule ferroviaire. A cet effet, les véhicules ferroviaires existants sont équipés de la prise de quai qui peut être raccordée à un réseau de moyenne tension solidaire du quai.

Le réseau moyenne tension comporte typiquement trois conducteurs de phases et un conducteur de neutre raccordé en permanence à la terre. Le quai est également équipé d'un disjoncteur différentiel interposé entre la prise de quai et le réseau moyenne tension de manière à pouvoir isoler électriquement cette prise de quai du réseau moyenne tension en cas de défaut d'isolement entre phase(s) et la terre.

Il arrive que le réseau de moyenne tension produise un courant de fuite à la terre, c'est-à-dire que la somme des intensités des courants circulant dans les trois conducteurs de phases n'est pas égale au courant de retour revenant dans le conducteur de neutre. Dans ces conditions, le disjoncteur différentiel peut se déclencher même si aucun défaut d'isolement dangereux pour la sécurité des personnes ou du matériel n'existe dans le véhicule ferroviaire. En effet, les capacités parasites des équipements électriques et, en particulier, le filtre CEM créent un chemin de fuite de courant à la fréquence fondamentale du réseau entre les conducteurs de phase du bus auxiliaire et la terre. Ensuite, ce courant de fuite rejoint le conducteur de neutre du réseau triphasé de moyenne tension par l'intermédiaire de la prise de terre de ce réseau. Lorsque le courant de fuite suit ce parcours, il ne repasse pas par l'intermédiaire du disjoncteur différentiel. Par conséquent, dès que l'intensité du courant de fuite dépasse le seuil de déclenchement du disjoncteur, typiquement 100 mA, cela peut provoquer un déclenchement intempestif de l'alimentation solidaire du quai.

Pour remédier à cet inconvénient, il a été proposé d'isoler galvaniquement le bus auxiliaire du réseau moyenne tension en embarquant dans le véhicule ferroviaire, entre la prise du quai et le bus auxiliaire soit un transformateur d'isolement supplémentaire, soit un convertisseur auxiliaire incorporant un transformateur d'isolement. Ces solutions sont lourdes et coûteuses.

L'invention vise à remédier à l'inconvénient précité sans avoir recours à une isolation galvanique entre le bus auxiliaire et le réseau moyenne tension.

Elle a donc pour objet un véhicule ferroviaire dans lequel le filtre CEM de convertisseur auxiliaire comporte :

- un circuit électrique d'isolation (C2) directement raccordé entre le point commun et la masse du convertisseur dont l'impédance à 50 Hz entre le point commun et la masse du convertisseur est au moins deux fois supérieure à l'impédance de conducteur de neutre comprise entre le filtre CEM et la prise de quai, et dont l'impédance aux fréquences supérieures à 10 kHz entre le point commun et la masse du convertisseur est inférieure à, ou du même ordre de grandeur que l'impédance de C1 aux mêmes fréquences respectives, et
- un conducteur électrique de court-circuit présentant deux extrémités dont l'une est directement raccordée au point commun et l'autre est directement raccordée au conducteur de neutre, l'impédance à 50 Hz entre les deux extrémités de ce conducteur étant inférieure à la moitié de l'impédance du circuit électrique d'isolation à la même fréquence.

Dans le véhicule ferroviaire ci-dessus, lorsque le convertisseur auxiliaire fonctionne pour alimenter le bus auxiliaire, celui-ci génère des signaux électriques parasites hautes fréquences. Aux hautes fréquences, à l'instar de la capacité C1, l'impédance du circuit électrique d'isolation est très faible. Par conséquent, les signaux hautes fréquences sont court-circuités à la masse, ce qui limite les perturbations électromagnétiques conduites et rayonnées par les convertisseurs et le véhicule ferroviaire de manière suffisante pour satisfaire aux normes de compatibilités électromagnétiques.

Lorsque le bus auxiliaire est alimenté à partir de la prise de quai en moyenne tension, du fait que l'impédance du circuit d'isolation C2 à 50 Hz est sensiblement supérieure à celle du conducteur électrique de court-circuit à la même fréquence, tout courant de fuite qui traverse l'un des condensateurs C1 retourne donc au conducteur de neutre du réseau moyenne tension essentiellement par l'intermédiaire du conducteur électrique de court-circuit. Dans ces conditions, même en cas de courant de fuite, la somme des intensités des courants dans les conducteurs de phases et dans le conducteur de neutre, mesurée par le disjoncteur différentiel, reste suffisamment proche de zéro (typiquement inférieure à 100 mA) pour limiter les déclenchements intempestifs du disjoncteur différentiel sans que pour cela il ait été nécessaire d'installer un transformateur supplémentaire entre le bus auxiliaire et le réseau de moyenne tension.

Les modes de réalisation de ce véhicule ferroviaire peuvent comporter une ou plusieurs des caractéristiques suivantes :

- le circuit électrique d'isolation du filtre CEM du convertisseur auxiliaire est formé d'un condensateur C2 raccordé en permanence entre le point commun et la masse, la capacité de ce condensateur C2 étant comprise entre 1 nF et 1 mF;
- au moins une charge auxiliaire raccordée au bus auxiliaire par l'intermédiaire de points de raccordement respectifs et munie d'une masse de charge auxiliaire raccordée à la terre est équipée de son propre deuxième filtre CEM directement raccordé entre les points de raccordement de phase et la masse de l'au moins une charge auxiliaire, ce filtre CEM comportant :

- un condensateur C1 raccordé entre chaque point de raccordement de phase du convertisseur auxiliaire et un même point commun raccordé à la masse de la charge auxiliaire, « directement » signifiant que le raccordement s'effectue sans passer par l'intermédiaire d'un conducteur électrique ou d'un composant électrique dont l'impédance aux fréquences supérieures à 10 kHz est supérieure à l'impédance de C1 aux mêmes fréquences respectives
- un circuit électrique C2 d'isolation directement raccordé entre le point commun et la masse de l'au moins une charge auxiliaire dont l'impédance à 50 Hz entre le point commun et la masse de l'au moins une charge auxiliaire est au moins deux fois supérieure à l'impédance de la partie de conducteur neutre comprise entre le filtre CEM et la prise de quai, et dont l'impédance aux fréquences supérieures à 10 kHz entre le point commun et la masse est inférieure à, ou du même ordre de grandeur que l'impédance de C1 aux mêmes fréquences respectives, et
- un conducteur électrique de court-circuit présentant deux extrémités dont l'une est directement raccordée au point commun et l'autre est directement raccordée au conducteur de neutre, l'impédance à 50 Hz entre les deux extrémités de ce conducteur étant inférieure à la moitié de l'impédance de C2 à la même fréquence ;

- dans lequel le véhicule comporte un circuit muni d'une masse du circuit raccordé à la terre, de mise à la masse du conducteur de neutre et de détection d'un défaut d'isolement entre un conducteur de phase et la masse du circuit, ledit circuit comprenant, raccordé en série entre le conducteur de neutre et la masse du circuit, un disjoncteur embarqué de détection et une résistance et ledit circuit comprenant une impédance de mise à la masse par défaut branchée entre le conducteur de neutre et la masse du circuit,
- dans lequel le véhicule comporte un coffret d'alimentation auxiliaire équipé d'une enveloppe conductrice raccordée à la terre, à l'intérieur de laquelle sont logés le convertisseur auxiliaire et le premier filtre CEM, le coffret formant la masse du convertisseur auxiliaire, et
- dans lequel l'impédance aux fréquences supérieures à 10 kHz des condensateurs C1 est suffisamment faible pour que les perturbations électromagnétiques conduites et rayonnées par les convertisseurs et le véhicule ferroviaire satisfassent les critères des normes EN 50 121-3-1 et EN 50 121-3-2.

Ces modes de réalisation du véhicule ferroviaire présentent en outre les avantages suivants :

- réaliser le circuit électrique d'isolation à l'aide d'un condensateur C2 simplifie sa réalisation,
- incorporer un circuit électrique d'isolation dans chaque filtre CEM de l'ensemble des convertisseurs auxiliaires d'alimentation et charges auxiliaires permet de réduire encore plus les risques de déclenchements intempestifs du disjoncteur de quai,
- le circuit de mise à la terre ci-dessus permet d'éviter les déclenchements intempestifs du disjoncteur de quai lorsque le bus auxiliaire est alimenté à partir de la prise de quai même si un défaut d'isolement entre un conducteur de phase et la masse est détecté, tout en permettant de fixer le potentiel du conducteur de neutre du véhicule ferroviaire à la masse lorsque le bus moyenne tension est alimenté à partir d'une caténaire,
- placer le filtre CEM à l'intérieur du coffret d'alimentation auxiliaire servant de masse locale permet de réduire les trajets de courants parasites et leur influence.

L'invention a également pour objet un atelier comportant :

- un réseau moyenne tension comportant plusieurs conducteurs électriques dont au moins un conducteur de phase et un conducteur de neutre électriquement raccordé à la terre,
- une prise de quai solidaire du quai, cette prise étant raccordée par différents conducteurs au réseau moyenne tension,
- un disjoncteur différentiel interposé entre le réseau moyenne tension et la prise de quai solidaire du quai, ce disjoncteur étant apte à basculer automatiquement d'un état passant vers un état non passant dès que la valeur absolue de la somme des intensités des courants circulant dans les conducteurs des phases et du neutre du réseau moyenne tension est supérieure ou égale à 100 mA.

Cet atelier comporte également le véhicule ferroviaire ci-dessus dans lequel la prise qui est solidaire du véhicule ferroviaire est embrochable dans la prise de quai solidaire du quai de manière à alimenter le bus auxiliaire à partir du réseau moyenne tension.

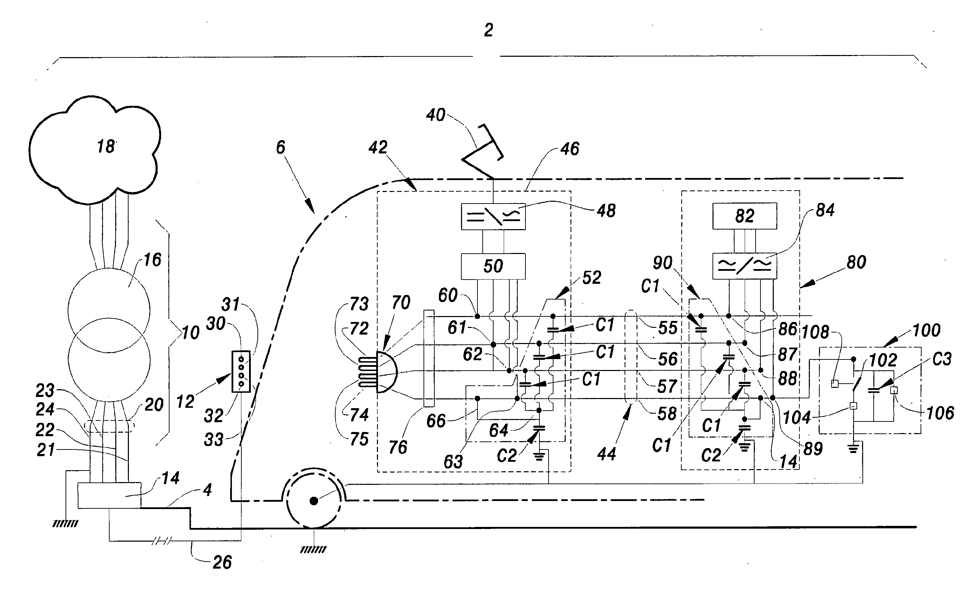

L'invention sera mieux comprise à la lecture de la description qui va suivre, donnée uniquement à titre d'exemple non limitatif et faite en se référant au dessin unique sur lequel :

- la figure est une illustration schématique d'un atelier pourvu d'un quai équipé d'une prise de quai et d'un véhicule ferroviaire raccordable à cette prise de quai.

Dans la suite de cette description, les caractéristiques et fonctions bien connues de l'homme du métier ne sont pas décrites en détail.

La figure représente un atelier 2 équipé d'un quai 4 d'accostage et d'un véhicule ferroviaire 6 accosté au quai 4. Le véhicule 6 est, par exemple, un train ou un métro.

L'atelier 2 comprend également :

- un réseau triphasé 10 de moyenne tension,
- une prise femelle 12 de quai mécaniquement raccordée au réseau 10, et
- un disjoncteur différentiel 14 interposé entre le réseau 10 et la prise 12 de manière à isoler électriquement la prise 12 du réseau 10 en cas de défaut d'isolement entre phases et terre.

Le réseau 10 est, par exemple, réalisé à l'aide d'un transformateur triphasé 16 raccordé au primaire à un réseau 18 de distribution d'électricité et au secondaire à un bus moyenne tension 20.

Le bus 20 est formé de trois conducteurs de phases 21 à 23 et d'un conducteur 24 de neutre. Le conducteur 24 est raccordé en permanence à la terre.

Le disjoncteur 14 est raccordé entre, d'un côté les conducteurs 21 à 24, et de l'autre côté à une liaison filaire 26 à l'extrémité de laquelle se trouve la prise 12. La liaison 26 comporte quatre conducteurs électriques raccordés électriquement à un conducteur respectif du bus 20 par l'intermédiaire du disjoncteur 14. Pour simplifier la figure, les quatre conducteurs de la liaison 26 n'ont pas été représentés.

Ici, le disjoncteur 14 est conçu pour disjoncter automatiquement dès que la somme des intensités des courants circulant à un instant donné dans les différents conducteurs de la liaison 26 est, en valeur absolue, supérieure à un seuil $S_d$ prédéterminé. Le seuil $S_d$ est généralement strictement supérieur à 100 mA et, par exemple, ici égal à 300 mA.

La prise femelle 12 comporte quatre douilles 30 à 33 électriquement raccordées à un conducteur respectif de la liaison 26.

Le véhicule 6 est équipé d'un pantographe 40 propre à frotter sur une caténaire pour capter de l'énergie électrique à partir de celle-ci lorsque le véhicule roule. La caténaire peut être alimentée en 25 kVca à 50 Hz, en 15 kVca à 16 Hz 2/3 ou encore sous une tension continue de 1500 ou de 3000 Vcc.

La caténaire est raccordée par l'intermédiaire de différents équipements non représentés à un coffret 42 d'alimentation auxiliaire destiné à alimenter un bus auxiliaire 44 en moyenne tension triphasée.

Typiquement, le coffret 42 présente une enveloppe extérieure 46 représentée par une ligne en pointillés à l'intérieur de laquelle est logé :

- un convertisseur électrique 48 propre à convertir, par exemple, une tension continue en une moyenne tension triphasée,
- des interrupteurs commandables 50 propres à isoler le convertisseur 48 du bus 44, et
- un filtre CEM 52.

L'enveloppe 46 est typiquement une enveloppe conductrice, par exemple en métal, raccordée à la masse. Ici, le raccordement des différents équipements embarqués à l'intérieur du véhicule 6 à la terre se fait, par exemple, par l'intermédiaire des roues du véhicule 6 et des rails sur lesquelles roule le véhicule 6.

Le convertisseur 48 est raccordé à un bus CC (non représenté) embarqué à l'intérieur du véhicule 6. Le bus CC est formé de deux conducteurs alimentés en tension continue par l'intermédiaire du pantographe 40. Le convertisseur 48 est donc ici un onduleur triphasé apte à générer une moyenne tension triphasée de 400 Vca à 50 Hz à partir de la tension continue du bus CC.

Les interrupteurs 50 permettent d'isoler électriquement le convertisseur 48 du bus 44 lorsque l'alimentation par la caténaire est interrompue ou en cas de défaut du convertisseur.

Le bus 44 comporte trois conducteurs de phases 55 à 57 et un conducteur de neutre 58.

Le convertisseur 48 est raccordé à chacun des conducteurs 55 à 58, par l'intermédiaire des interrupteurs 50, en des points de raccordement 60 à 63.

Le filtre 52 est directement raccordé entre les points de raccordement 60 à 62 et la masse du convertisseur. La masse du convertisseur est raccordée à la terre au travers des roues du véhicule ferroviaire et de sa structure ou d'un câble. Le filtre 52 est apte à court-circuiter les signaux parasites hautes fréquences générés par le convertisseur 48 à la masse. A cet effet, le filtre 52 comporte trois condensateurs C1 directement raccordés entre l'un des points de raccordement 60 à 62 respectifs et un point commun 64.

Le filtre 52 comporte également :

- un conducteur 66 de court-circuit directement raccordé entre le point commun 64 et le conducteur 58, et
- un seul circuit électrique d'isolation directement raccordé entre le point commun 64 et la masse.

L'impédance du conducteur 66 à 50 Hz est ici inférieure à l'impédance du circuit électrique d'isolation à la même fréquence dans un rapport d'au moins un dixième.

A titre d'illustration, les capacités des condensateurs C1 et du condensateur C2 sont ici prises égales.

La capacité du condensateur C2 est choisie pour vérifier les deux conditions suivantes :

1) l'impédance du condensateur C2 à 50 Hz est nettement supérieure à celle du conducteur de retour du courant vers le réseau moyenne tension de la prise de quai, et
2) l'impédance aux fréquences supérieures à 10 kHz du condensateur C2 est à l'instar de la capacité C1 très faible.

On rappelle que l'impédance Z d'un condensateur parfait est fonction de la fréquence du courant et définie par la relation suivante :

$$Z = \frac{1}{2\pi Cf} \tag{1}$$

où :

- Z est l'impédance,
- C est la capacité du condensateur, et
- f est la fréquence du courant prise en compte.

Pour remplir les deux conditions précédentes, la capacité du condensateur C2 est choisie entre 1 nF et 1 mF. Ici, la capacité du condensateur C2 est choisie égale à 1 µF.

De façon plus précise, les capacités des condensateurs C1 et C2 sont choisies de manière à se conformer aux normes EN 50 121-3-2 pour le train complet et EN 50 121-3-1 pour les appareils le constituant. En émission rayonnée, la limite est définie par la même EN 50 121-3-1 pour le train et véhicules complets alimentés par le pantographe 40 ou par la prise 12. En émission conduite la limite est définie par la norme EN 50 121-3-2 pour des appareils seuls.

Le véhicule comprend également une prise mâle 70 de quai solidaire de l'enveloppe 46. Cette prise 70 comprend quatre broches 72 à 75 électriquement et directement raccordées, respectivement, aux conducteurs 55 à 58 via un contacteur d'isolement 76 sans passer par l'intermédiaire d'un transformateur ou d'un convertisseur à isolement galvanique. Les douilles 30 à 32 sont aptes à recevoir les broches 72 à 75 de manière à alimenter le bus 44 à partir du réseau 10.

Le véhicule 6 comprend également de nombreuses charges auxiliaires. Certaines comportent leur propre convertisseur électrique de manière à convertir la tension triphasée en une autre tension ou fréquence nécessaire pour leur fonctionnement.

Sur la figure, seule une charge auxiliaire 80 a été représentée. Cette charge 80 est, par exemple, un climatiseur. La charge 80 comprend un compresseur 82 alimenté en courant alternatif de fréquence variable par l'intermédiaire d'un convertisseur triphasé-triphasé 84 raccordé aux conducteurs de phases 55 à 58. Le convertisseur 84 est raccordé à chacun de ces conducteurs 55 à 58 par l'intermédiaire de points de raccordement respectifs 86 à 89.

La charge 80 comprend également son propre filtre CEM 90. Ce filtre 90 est directement raccordé entre les points 86 à 88 et la masse de la charge. La masse de la charge est raccordée à la terre au travers des roues du véhicule ferroviaire et de sa structure ou d'un câble. La structure du filtre 90 est identique à celle du filtre 52 et ne sera donc pas décrite ici plus en détail. Les capacités des condensateurs C1 et C2 qui forment le filtre 90 sont déterminées de la même façon que ce qui a été décrit en regard du filtre 52. Par exemple, ses capacités sont identiques à celles du filtre 52.

Enfin, le véhicule 6 comprend un circuit 100, muni d'une masse de circuit raccordé à la terre, de raccordement du conducteur 58 de neutre à la terre. Ce circuit 100 comprend :

- un disjoncteur embarqué de détection 102 raccordé en série avec une résistance 104 directement entre le conducteur 58 et la masse du circuit,
- un condensateur C3 directement raccordé entre le conducteur 58 et la masse,
- une résistance 106 de décharge directement raccordée en parallèle entre les bornes du condensateur C3, et
- un circuit 108 de pilotage du disjoncteur 102.

La résistance 104 a une valeur nettement supérieure à celle du conducteur de retour du courant vers le réseau moyenne tension de la prise de quai mais est nettement inférieure à la résistance 106.

La capacité du condensateur C3 est choisie de manière à constituer un court-circuit entre le conducteur 58 et la masse pour les hautes fréquences. L'impédance à 50 Hz du condensateur C3 est supérieure ou égale à la résistance 106. Par exemple, ici, la capacité du condensateur C3 est choisie égale à celle du condensateur C2.

Le disjoncteur embarqué de détection est normalement fermé. Si suite à un défaut d'isolement entre une phase et la masse, un courant de défaut, supérieur au seuil de détection fixé par le circuit 108 de pilotage, est détecté par le disjoncteur, l'ouverture du disjoncteur 102 signale le défaut d'isolement au personnel de maintenance, tout en maintenant l'alimentation du bus auxiliaire.

En mode d'alimentation sur caténaire, le condensateur C3 et la résistance 106 assurent qu'en cas d'ouverture du disjoncteur 102 le potentiel du conducteur de neutre (58) restera proche de celui de la masse.

Le fonctionnement de l'atelier 2 va maintenant être décrit. Lorsque le véhicule 6 est arrêté à proximité du quai 4, l'alimentation à partir de la caténaire est interrompue. De préférence, le convertisseur 48 est alors électriquement isolé du bus 44 grâce aux interrupteurs 50.

Ensuite, un opérateur embroche les prises 12 et 70 l'une dans l'autre. Un circuit non représenté commande alors la fermeture du contacteur d'isolement 76. A partir de ce moment, le bus 44 est alimenté en moyenne tension par le réseau 10. Ceci permet donc de faire fonctionner les différentes charges auxiliaires telle que la charge 80 même si le véhicule 6 est électriquement isolé de la caténaire.

On suppose maintenant que le réseau 10 est un réseau triphasé produisant un courant de fuite. Dans ces conditions, un courant de fuite traverse au moins l'un des condensateurs C1 pour atteindre le point commun 64. A ce stade là, le courant de fuite retourne vers le conducteur 58 par l'intermédiaire du conducteur 66. En effet, le conducteur 66 présente une impédance à 50 Hz nettement plus petite que l'impédance des condensateurs C2 des différents équipements du train et que celle des résistances 104, 106 et du condensateur C3 du circuit de détection 100. Ainsi, le courant de fuite retourne au réseau 10 par l'intermédiaire du conducteur 58, de la liaison filaire 26 avant d'atteindre le conducteur 24. Dans ces conditions, bien que le réseau 10 soit déséquilibré, la somme des intensités des courants dans les différents conducteurs de phases et dans le conducteur de neutre reste inférieure au seuil de détection différentielle, ici 300 mA de sorte que le disjoncteur 14 ne se déclenche pas.

De façon similaire, le filtre 90 empêche un déclenchement intempestif du disjoncteur 14.

Dans cet état, le circuit 100 isole le conducteur 58 de la terre de sorte que le courant de fuite ne peut pas non plus fuir par l'intermédiaire de ce circuit.

Une fois les opérations de maintenance ou d'entretien terminées, la prise 12 est débrochée de la prise 70, le contacteur d'isolement 76 est ouvert et le véhicule 6 est de nouveau alimenté par l'intermédiaire du pantographe 40 et d'une caténaire. Dans ces conditions, les interrupteurs 50 raccordent le convertisseur 48 au bus 44. A partir de ce moment, le bus 44 est alimenté en moyenne tension par l'intermédiaire du convertisseur 48 et non plus par l'intermédiaire de la prise 70. Dans ce mode de fonctionnement, les filtres 52 et 90 diminuent l'effet des signaux électriques hautes fréquences de manière à réduire les perturbations conduites et rayonnées dues aux commutations des interrupteurs des différents convertisseurs embarqués dans le véhicule 6.

De nombreux autres modes de réalisation sont possibles. Par exemple, le convertisseur auxiliaire d'alimentation du bus ou le convertisseur d'une charge auxiliaire est soit situé dans la locomotive du véhicule 6 ou dans une voiture de passagers.

Lorsque la charge 80 est un chargeur de batterie, le convertisseur 84 et le filtre 90 peuvent être intégrés à l'intérieur du coffret 42.

Enfin, l'atelier 2 a été décrit dans le cas particulier d'un bus 44 triphasé. Toutefois, ce qui a été décrit ci-dessus peut également être adapté au cas d'un bus auxiliaire monophasé. Dans cette variante, deux des condensateurs C1 des filtres CEM sont omis.

La prise 70 peut être omise si, par exemple, la source d'alimentation en tension triphasée du bus auxiliaire est embarquée dans le véhicule 6, un moyen de connexion électrique sans fiche assurant la liaison entre la source d'alimentation en tension embarquée dans le véhicule 6 et le bus auxiliaire triphasé (44).

**Revendications**

1. Véhicule ferroviaire comportant :

    - un bus auxiliaire (44) d'alimentation en moyenne tension formé d'au moins un conducteur (55-57) de phase et d'un conducteur (58) de neutre, auxquels sont raccordées des charges auxiliaires (80) embarquées à l'intérieur du véhicule ferroviaire,
    - au moins un convertisseur auxiliaire (48) apte à convertir de l'énergie électrique captée à partir d'une caténaire en de la moyenne tension délivrée sur le bus auxiliaire (44) lorsque le véhicule ferroviaire est connecté à la caténaire, ce convertisseur auxiliaire étant raccordé à cet effet aux conducteurs de phase et de neutre du bus auxiliaire en des points de raccordement (60-63), et muni d'une masse de convertisseur raccordée à la terre,
    - un premier filtre CEM (Compatibilité Electromagnétique) (52) directement raccordé entre les points de raccordement des conducteurs de phase et la masse du convertisseur auxiliaire, ce filtre CEM comportant un condensateur C1 raccordé entre chaque point de raccordement de phase du convertisseur auxiliaire et un même point commun (64) raccordé à la masse du convertisseur, « directement » signifiant que le raccordement s'effectue sans passer par l'intermédiaire d'un conducteur électrique ou d'un composant électrique dont l'impédance aux fréquences supérieures à 10 kHz est supérieure à l'impédance de C1 aux mêmes fréquences respectives, et
    - un moyen de connexion (70) solidaire du véhicule ferroviaire et raccordée à chaque conducteur (55-58) du bus auxiliaire (44), apte à relier électriquement une alimentation du bus auxiliaire en moyenne tension lorsque le véhicule ferroviaire est déconnecté de la caténaire,

    **caractérisé en ce que** le filtre CEM comporte :

- un circuit électrique d'isolation (C2) directement raccordé entre le point commun (64) et la masse du convertisseur dont l'impédance à 50 Hz entre le point commun et la masse du convertisseur est au moins deux fois supérieure à l'impédance de la partie de conducteur de neutre comprise entre le filtre CEM et le moyen de connexion (70), et dont l'impédance aux fréquences supérieures à 10 kHz entre le point commun et la masse est inférieure à, ou du même ordre de grandeur que l'impédance de C1 aux mêmes fréquences respectives, et
- un conducteur électrique (66) de court-circuit présentant deux extrémités dont l'une est directement raccordée au point commun (64) et l'autre est directement raccordée au conducteur de neutre, l'impédance à 50 Hz entre les deux extrémités de ce conducteur étant inférieure à la moitié de l'impédance de C2 à la même fréquence.

2. Véhicule selon la revendication 1, dans lequel le circuit électrique d'isolation est formé d'un condensateur C2 raccordé en permanence entre le point commun (64) et la terre, la capacité de ce condensateur C2 étant comprise entre 1 nF et 1 mF.

3. Véhicule selon l'une quelconque des revendications précédentes, dans lequel au moins une charge auxiliaire (80) raccordée au bus auxiliaire par l'intermédiaire de points de raccordement respectifs (86-89) et muni d'une masse de charge auxiliaire raccordée à la terre est équipée de son propre deuxième filtre CEM (90) directement raccordé entre les points (86-88) de raccordement de phase et la masse de l'au moins une charge auxiliaire, ce filtre CEM comportant :

- un condensateur C1 raccordé entre chaque point (86-88) de raccordement de phase de l'au moins une charge auxiliaire et un même point commun raccordé à la masse de l'au moins une charge auxiliaire, « directement » signifiant que le raccordement s'effectue sans passer par l'intermédiaire d'un conducteur électrique ou d'un composant électrique dont l'impédance aux fréquences supérieures à 10 kHz est supérieur à l'impédance de C1 aux mêmes fréquences respectives,
- un circuit électrique d'isolation (C2) directement raccordé entre le point commun et la masse de l'au moins une charge auxiliaire dont l'impédance à 50 Hz entre le point commun et la masse de la charge auxiliaire est au moins deux fois supérieure à l'impédance de la partie de conducteur de neutre comprise entre le filtre CEM et le moyen de connexion (70), et dont l'impédance aux fréquences supérieures à 10 kHz entre le point commun et la masse est inférieure à, ou du même ordre de grandeur que l'impédance de C1 aux mêmes fréquences respectives, et
- un conducteur électrique de court-circuit présentant deux extrémités dont l'une est directement raccordée au point commun et l'autre est directement raccordée au conducteur de neutre, l'impédance à 50 Hz entre les deux extrémités de ce conducteur étant inférieure à la moitié de l'impédance de C2 à la même fréquence.

4. Véhicule selon l'une quelconque des revendications précédentes dans lequel le véhicule comporte un circuit (100) muni d'une masse du circuit raccordé à la terre, de mise à la masse du conducteur de neutre (58) et de détection d'un défaut d'isolement entre un conducteur de phase et la masse du circuit, ledit circuit (100) comprenant, raccordé en série entre le conducteur (58) de neutre et la masse du circuit, un disjoncteur embarqué de détection (102) et une résistance (104), ledit circuit (100) comprenant également une impédance (C3, 106) de mise à la masse par défaut, branché entre le conducteur (58) de neutre et la masse du circuit.

5. Véhicule selon l'une quelconque des revendications précédentes, dans lequel le véhicule comporte un coffret (42) d'alimentation auxiliaire équipé d'une enveloppe conductrice (46) raccordée à la terre, à l'intérieur de laquelle sont logés le convertisseur auxiliaire et le premier filtre CEM, ledit coffret (42) formant la masse du convertisseur auxiliaire.

6. Atelier comprenant :

- un véhicule ferroviaire (6) défini selon la revendication 1,

- un réseau (10) moyenne tension comportant plusieurs conducteurs électriques (20-24) dont au moins un conducteur de phase et un conducteur de neutre (24) électriquement raccordé à la terre,
- une prise (12) de quai solidaire du quai, cette prise étant raccordée par différents conducteurs (26) au réseau moyenne tension,
- un disjoncteur différentiel (14) interposé entre le réseau moyenne tension (10) et la prise (12) de quai solidaire du quai, ce disjoncteur (14) étant apte à basculer automatiquement d'un état passant vers un état non passant dès que la valeur absolue de la somme des intensités des courants circulant dans les différents conducteurs du réseau moyenne tension est supérieure ou égale à 100 mA, et

dans lequel le moyen de connexion (70) de quai solidaire du véhicule ferroviaire est embrochable dans la prise (12) de quai solidaire du quai de manière à alimenter le bus auxiliaire (44) à partir du réseau moyenne tension.

**Claims**

1. Rail vehicle including:

   - a medium-voltage auxiliary supply bus (44) comprising at least one phase conductor (55-57) and a neutral conductor (58), to which on-board auxiliary loads (80) inside the rail vehicle are connected,
   - at least one auxiliary converter (48) arranged to convert electrical energy, taken from a medium-voltage contact line, which is delivered to the auxiliary bus (44), when the rail vehicle is connected to the contact line, that auxiliary converter being connected for that purpose to the phase conductors and neutral conductor of the auxiliary bus at connection points (60-63) and being provided with a converter ground connected to earth,
   - a first EMC (electromagnetic compatibility) filter (52) directly connected between the connection points of the phase conductors and the ground of the auxiliary converter, this EMC filter including a capacitor C1 connected between each phase connection point of the auxiliary converter and a single common point (64) connected to the converter ground, "directly" meaning that the connection is made without passing by way of an electrical conductor or electrical component whose impedance at frequencies greater than 10 kHz is greater than the impedance of C1 at the same respective frequencies, and
   - a connecting means (70) mounted on the rail vehicle and connected to each conductor (55-58) of the auxiliary bus (44) and arranged to electrically connect a medium-voltage supply for the auxiliary bus when the rail vehicle is disconnected from the contact line,

   **characterised in that** the EMC filter includes:

   - an electrical isolation circuit (C2), directly connected between the common point (64) and the converter ground, whose impedance at 50 Hz between the common point and the converter ground is at least two times greater than the impedance of that part of the neutral conductor which is between the EMC filter and the connecting means (70) and whose impedance at frequencies greater than 10 kHz between the common point and the ground is less than or of the same order of magnitude as the impedance of C1 at the same respective frequencies, and
   - an electrical short-circuit conductor (66) having two ends, one of which is direct connected to the common point (64) and the other of which is directly connected to the neutral conductor, the impedance at 50 Hz between the two ends of that conductor being less than half the impedance of C2 at the same frequency.

2. Vehicle according to claim 1, wherein the electrical isolation circuit comprises a capacitor C2 permanently connected between the common point (64) and earth, the capacity of that capacitor C2 being between 1 nF and 1 mF, inclusive.

3. Vehicle according to any one of the preceding claims, wherein at least one auxiliary load (80), connected to the auxiliary bus by way of respective connection points (86-89) and provided with an auxiliary load ground connected to earth, is equipped with its own second EMC filter (90) directly connected between the phase connection points (86-88) and the ground of the at least one auxiliary load, that EMC filter including:

   - a capacitor C1 connected between each phase connection point (86-88) of the at least one auxiliary load and a single common point connected to the ground of the at least one auxiliary load, "directly" meaning that the connection is made without passing by way of an electrical conductor or electrical component whose impedance at frequencies greater than 90 kHz is greater than the impedance of C1 at the same respective frequencies,
   - an electrical isolation circuit (C2), directly connected between the common point and the ground of the at least one auxiliary load, whose impedance at 50 Hz between the common point and the ground of the auxiliary load is at least two times greater than the impedance of that part of the neutral conductor which is between the EMC filter and the connecting means (70) and whose impedance at frequencies greater than 10 Hz between the common point and the ground is less than or of the same order of magnitude as the impedance of C1 at the same respective frequencies, and
   - an electrical short-circuit conductor having two ends, one of which is directly connected to the common point and the other of which is directly connected to the neutral conductor, the impedance at 50 Hz between the two ends of that conductor being less than half the impedance of C2 at the same frequency.

4. Vehicle according to any ane of the preceding claims, wherein the vehicle includes a circuit (100) provided with a circuit ground connected to earth, for grounding the neutral conductor (58) and for detection of an isolation fault between a phase conductor and the circuit ground, said circuit (100) comprising, connected in series between the neutral conductor (58) and the circuit ground, an on-board detection disconnector (102) and a resistance (104), said circuit (100) also comprising, for grounding by default, an impedance (C3, 106) connected between the neutral conductor (58) and the circuit ground.

5. Vehicle according to any one of the preceding claims, wherein the vehicle includes an auxiliary supply cabinet (42) equipped with a conducting envelope (46) connected to earth, inside which there are housed the auxiliary converter and the first EMC filter, said cabinet (42) forming the auxiliary converter ground.

6. Workshop comprising:

   - a rail vehicle (6) defined according to claim 3,
   - a medium-voltage network (10) having a plurality of electrical conductors (20-24) including at least one phase conductor and a neutral conductor (24) which is electrically connected to earth,
   - a platform socket (12) mounted on the platform, that socket being connected by different conductors (26) to the medium-voltage network,
   - a differential disconnector (14) interposed between the medium-voltage network (10) and the platform socket (12) mounted on the platform, that disconnecter (14) being arranged to flip automatically from a conducting state to a non-conducting state as soon as the absolute value of the sum of the levels of the currents circulating in the various conductors of the medium-voltage network is greater than or equal to 100 mA,

   and
   wherein the platform connecting means (70) mounted on the rail vehicle is insertable into the platform socket (12) mounted on the platform so as to supply the auxiliary bus (44) from the medium-voltage network.

**Patentansprüche**

1. Schienenfahrzeug, das Folgendes aufweiset:

   - einen Hilfsbus (44) zur Versorgung mit Mittelspannung, der von mindestens einem Phasenleiter (55-57) und mindestens einem Nullleiter (58) gebildet wird, an die Hilfslasten (80) angeschlossen sind, die sich im Inneren des Schienenfahrzeugs befinden,
   - mindestens einen Hilfswandler (48), der ausgehend von einer Fahrleitung aufgefangene elektrische Energie in Mittelspannung umwandeln kann, die an den Hilfsbus (44) geliefert wird, wenn das Schienenfahrzeug mit der Fahrleitung verbunden ist, wobei dieser Hilfswandler zu diesem Zweck an die Phasen- und Nullleiter des Hilfsbusses an Anschlusspunkten (60-63) angeschlossen und mit einer geerdeten Wandlermasse versehen ist,
   - ein erstes EMK-Filter (elektromagnetische Kompatibilität) (52), das direkt zwischen den Anschlusspunkten der Phasenleiter und der Masse des Hilfswandlers angeschlossen ist, wobei dieses EMK-Filter einen Kondensator C1 aufweist, der zwischen jedem Phasenanschlusspunkt des Hilfswandlers und einem gleichen gemeinsamen Punkt (64) angeschlossen ist, der an die Masse des wandlers angeschlossen ist, wobei "direkt" bedeutet, dass der Anschluss erfolgt, ohne über einen elektrischen Leiter oder ein elektrisches Bauteil zu gehen, dessen. Impedanz bei den Frequenzen höher als 10 kHz höher als die Impedanz von C1 bei den gleichen jeweiligen Frequenzen ist, und
   - eine fest mit dem Schienenfahrzeug verbundene und an jeden Leiter (55-58) des Hilfsbusses (44) angeschlossene Verbindungseinrichtung (70), die eine Versorgung des Hilfsbusses mit Mittelspannung elektrisch verbinden kann, wenn das Schienenfahrzeug von der Fahrleitung angeklemmt ist,

   **dadurch gekennzeichnet, dass** das EMK-Filter Folgendes aufweist:

   - e.ine elektrische Isolierschaltung (C2), die direkt zwischen dem gemeinsamen Punkt (64) und der Masse des Wandlers angeschlossen ist, deren Impedanz bei 50 Hz zwischen dem gemeinsamen Punkt und der Masse des Wandlers mindestens doppelt so hoch wie die Impedanz des Nullleiterbereichs ist, der zwischen dem EMK-Filter und der Verbindungseinrichtung (70) liegt, und deren Impedanz bei den Frequenzen höher als 10 kHz zwischen dem gemeinsamen Punkt und der Masse geringer als oder in der gleichen Größenordnung ist wie die Impedanz von C1 bei den gleichen jeweiligen Frequenzen, und

- einen elektrischen Kurzschlussleiter (66), der zwei Ende hat, von denen eines direkt an den gemeinsamen Punkt (64) und das andere direkt an den Nullleiter angeschlossen ist, wobei die Impedanz bei 50 Hz zwischen den zwei Enden dieses Leiters geringer als die Hälfte der Impedanz von C2 bei der gleichen Frequenz ist.

2. Fahrzeug nach Anspruch 1, bei dem die elektrische Isolierschaltung von einem Kondensator C2 gebildet wird, der ständig zwischen dem gemeinsamen Punkt (64) und der Erde angeschlossen ist, wobei die Kapazität dieses Kondensator C2 zwischen 1 nF und 1 mF liegt.

3. Fahrzeug nach einem der vorhergehenden Ansprüche, bei dem mindestens eine Hilfslast (80), die an den Hilfsbus über jeweilige Anschlusspunkte (86-89) abgeschlossen und mit einer geerdeten Hilfslastmasse versehen ist, mit ihrem eigenen zweiten EMK-Filter (90) ausgestattet ist, das direkt zwischen den Phasenanschlusspunkten (86-88) und der Masse der mindestens einen Hilfslast angeschlossen ist, wobei dieses EMK-Filter Folgendes aufweist:

   - einen Kondensator C1, der zwischen jedem Phasenanschlusspunkt (86-88) der mindestens einen Hilfslast und einem gleichen gemeinsamen Punkt angeschlossen ist, der an die Masse der mindestens einen Hilfslast angeschlossen ist, wobei "direkt" bedeutet, dass der Anschluss erfolgt, ohne über einen elektrischen Leiter order ein elektrische Bauteil zu gehen, dessen Impedanz bei den Frequenzen höher als 10 kHz höher als die Impedanz von C1 bei den gleichen jeweilige Frequenzen ist,
   - eine elektrische Isolierschaltung (C2), die direkt zwischen dem gemeinsamen Punkt und der Masse der mindestens einen Hilfslast angeschlossen ist, deren Impedanz bei 50 Hz zwischen dem gemeinsamen Punkt und der Masse der Hilfslast mindestens doppelt so hoch wie die Impedanz des Nullleiterbereichs ist, der zwischen dem EMK-Filter und der Verbindungseinrichtung (70) liegt, und deren Impedanz bei den Frequenzen höher als 10 kHz zwischen dem gemeinsamen Punkt und der Masse geringer als oder in der gleichen Größenordnung ist wie die Impedanz von C1 bei den gleichen jeweiligen Frequenzen, und
   - einen elektrischen Kurzschlussleiter, der zwei Enden hat, von denen eines direkt an den gemeinsamen Punkt und das andere direkt an den Nullleiter angeschlossen ist, wobei die Impedanz bei 50 Hz zwischen den zwei Enden dieses Leiters geringer als die Hälfte der Impedanz von C2 bei der gleichen Frequenz ist.

4. Fahrzeug nach einem der vorhergehenden Ansprüche, bei dem das Fahrzeug eine Schaltung (100), die mit einer Masse der geerdeten Schaltung versehen ist, zum Anlegen an Masse des Nullleiters (58) und zur Erfassung eines Isolierfehlers zwischen einem Phasenleiter und der Masse der Schaltung aufweiset, wobei die Schaltung (100) zwischen dem Nullleiter (58) und der Masse der Schaltung in Reihe geschaltet einen an Bord befindlichen Erfassungs-Schutzschalter (102) und einen Widerstand (104) enthält, wobei die Schaltung (100) ebenfalls eine Fehler-Erdungsimpedanz (C3, 106) enthält, die zwischen dem Nullleiter (58) und der Masse der Schaltung angeschlossen ist.

5. Fahrzeug nach einem der vorhergehenden Ansprüche, bei dem das Fahrzeug einen Hilfsversorgungskasten (42) aufweist, der mit einer geerdeten Auskleidung (45) ausgestattet ist, in deren Innerem der Hilfswandler und das erste EMK-Filter untergebracht sind, wobei der Kasten (42) die Masse des Hilfswandlers bildet.

6. Werkstatt, die Folgendes enthält:

   - ein gemäß Anspruch 1 definiertes Schienenfahrzeug (6),
   - ein Mittelspannungsnetz (10), das mehrere elektrische Leiter (20-24) aufweist, darunter mindestens einen Phasenleiter und einen elektrisch geerdeten Nullleiter (24),
   - einen fest mit dem Bahnsteig verbundenen Bahnsteiganschluss (12), wobei dieser Anschluss über verschiedene Leiter (26) an das Mittelspannungsnetz angeschlossen ist,
   - einen Fehlerstromschutzschalter (14), der zwischen das Mittelspannunganetz (10) und den fest mit dem Bahnsteig verbundenen Bahnsteiganschluss (12) eingefügt ist, wobei dieser Schutzschalter (14) automatisch von eine leitenden Zustand in einen nicht leitenden Zustand kippen kann, sobald der Absolutwert der Summe der in den verschiedenen Leitern des Mittelapannungsnetzes fließenden Stromstärken höher als oder gleich 100 mA ist, und

   bei dem die fest mit dem Schienenfahrzeug verbundene Bahnsteig-Verbindungseinrichtung (70) in den fest mit dem Bahnsteig verbundenen Bahnsteiganschluss (12) eingesteckt werden kann, um den Hilfsbus (44) ausgehend vom Mittelspannungsnetz zu versorgen.

## RÉFÉRENCES CITÉES DANS LA DESCRIPTION

**Littérature non-brevet citée dans la description**

- **Belmonte J.C. et al.** Static Converters for Rolling Stock - Recent Developments and Experience. *Alsthom Review,* Janvier 1986, (4), 39-50